# EUROPEAN PATENT APPLICATION

(11) **EP 4 530 815 A1**
(43) Date of publication of application: **02.04.2025**
(21) Application number: 24197349.4
(22) Date of filing: 29.08.2024
(51) Int. Cl.: G06F 3/06, G06F 9/54, G06F 11/30

(54) **HARD DRIVE MANAGEMENT METHOD AND APPARATUS, DEVICE, AND MACHINE-READABLE STORAGE MEDIUM**

(30) Priority: 26.09.2023 CN 202311261784
(71) Applicant: New H3C Information Technologies Co., Ltd., Hangzhou, Zhejiang 310056 (CN)
(72) Inventor: CHEN, Bo, Beijing, 100102 (CN)
(74) Representative: 2SPL Patentanwälte PartG mbB

(57) **Abstract**

A hard drive management method includes: driving the hard drive by invoking a user-mode driver; registering a polling thread to periodically issue and execute associated commands through a command interface, acquiring event information of the hard drive, and executing a corresponding processing flow based on the type of event information; and in response to an operation signaling, issuing and executing associated commands through the command interface to perform at least one of: configuring the NVMe hard drive based on the RPC commands; or making the NVMe hard drive respond to the RPC commands.

## Description

### TECHNICAL FIELD

The present disclosure relates to the field of communication technology, particularly to a hard drive management method and apparatus, an electronic device, and a machine-readable storage medium.

### BACKGROUND

The Storage Performance Development Kit (SPDK) is a suite of tools and libraries for writing high-performance, scalable user-mode storage applications. Non-Volatile Memory Express (NVMe) is a standard for non-volatile memory, and SSDs that adopt this standard are referred to as NVMe SSDs.

The SPDK provides a foundation for user-space, polling-mode, asynchronous, and lock-free NVMe drivers. This enables zero-copy, highly parallel access to NVMe SSDs directly from user-space applications. Furthermore, the SPDK may offer a complete block stack as a user-space library capable of performing many operations similar to those of the block storage software stack in an operating system. On top of this, the SPDK also provides NVMe-oF, iSCSI, and Vhost-user application services.

With the increasing application of SPDK, monitoring and management of NVMe devices have become a necessary requirement. Specifically, how to enable users to monitor and manage NVMe devices that reside in user-space applications, especially in a convenient, easy, and universal manner, necessitates support from commonly used Linux tools, especially Nvme-cli.

The SPDK community has modified the Nvme-cli source code to incorporate specific changes for SPDK-based NVMe devices, enabling Nvme-cli to function with these devices. However, this implementation method essentially starts an SPDK instance within the Nvme-cli process, making it difficult to merge into the main branch of Nvme-cli.

One alternative approach is a scheme provided by SPDK for monitoring and managing NVMe SSDs through NVMe-cli. This scheme adds NVMe character device functionality to SPDK, implemented based on CUSE. It creates corresponding character device nodes in the Linux kernel for NvmeControllers and Nvme Namespaces. Tools like Nvme-cli can monitor and manage SPDK-managed NVMe devices without modification, leveraging these emulated character devices.

However, the NVMeNamespace path files created through CUSE in the above scheme have character device attributes, whereas in reality, NVMeNamespace attributes should typically be block devices. This mismatch in device type configurations can easily lead to unexpected issues during program execution. Consequently, this scheme is complex, requiring additional operations during compilation and usage. Additionally, while it allows using NVMe-cli commands for device monitoring and management, it does not directly provide corresponding management interfaces for upper-layer calls, limiting its usage scenarios. Furthermore, it fails to detect and handle disk status abnormalities or failures in real-time.

### SUMMARY

In view of the above, the present disclosure provides a hard drive management method and apparatus, an electronic device, and a machine-readable storage medium to improve at least one of the aforementioned technical issues.

The examples are as follows:
The present disclosure provides a hard drive management method applied to a management module for an NVMe device. The method includes: driving an NVMe hard drive by invoking a user-mode NVMe driver, wherein the user-mode driver is configured with a remote procedure call (RPC) command interface, and the RPC command interface is used to enable corresponding device management functions to be performed on the NVMe hard drive based on received RPC commands; registering a polling thread to periodically issue and execute associated RPC commands through the RPC command interface, acquiring event information of the NVMe hard drive, and executing corresponding processes based on a type of event information; and in response to an operation signaling, issuing and executing the associated RPC commands through the RPC command interface to perform at least one of: configuring the NVMe hard drive based on the RPC commands; or making the NVMe hard drive respond to the RPC commands.

In an example, registering the polling thread to periodically issue and execute the associated RPC commands through the RPC command interface, acquiring the event information of the NVMe hard drive, and executing the corresponding processes based on the type of event information, includes: executing asynchronous event reception reporting and/or alerting based on the type of event information.

In an example, in response to the operation signaling, issuing and executing the associated RPC commands through the RPC command interface to perform at least one of: configuring the NVMe hard drive based on the RPC commands; or making the NVMe hard drive respond to the RPC commands, includes: in response to the operation signaling, issuing and executing an NVMe hard drive firmware upgrade command, an NVMe hard drive information collection command, or an NVMe hard drive data processing command through the RPC command interface, such that the NVMe hard drive performs firmware upgrade, information feedback, or data processing based on the RPC commands.

In an example, the RPC commands include customizable personalized RPC commands.

The present disclosure also provides a hard drive management apparatus applied to a management module for an NVMe device. The device includes: a first module for driving an NVMe hard drive by invoking a user-mode NVMe driver, wherein the user-mode driver is configured with a remote procedure call (RPC) command interface, and the RPC command interface is used to enable corresponding device management functions to be performed on the NVMe hard drive based on received RPC commands; a second module for registering a polling thread to periodically issue and execute associated RPC commands through the RPC command interface, acquiring event information of the NVMe hard drive, and executing corresponding processing flows based on a type of event information; and a third module for, in response to an operation signaling, issuing and executing the associated RPC commands through the RPC command interface to perform at least one of: configuring the NVMe hard drive based on the RPC commands; or making the NVMe hard drive respond to the RPC commands.

In an example, registering the polling thread to periodically issue and execute the associated RPC commands through the RPC command interface, acquiring the event information of the NVMe hard drive, and executing the corresponding processes based on the type of event information, includes: executing asynchronous event reception reporting and/or alerting based on the type of event information.

In an example, in response to the operation signaling, issuing and executing the associated RPC commands through the RPC command interface to perform at least one of: configuring the NVMe hard drive based on the RPC commands; or making the NVMe hard drive respond to the RPC commands, includes: in response to the operation signaling, issuing and executing an NVMe hard drive firmware upgrade command, an NVMe hard drive information collection command, or an NVMe hard drive data processing command through the RPC command interface, such that the NVMe hard drive performs firmware upgrade, information feedback, or data processing based on the RPC commands.

In an example, the RPC commands include customizable personalized RPC commands.

In an example, the present disclosure provides an electronic device including a processor and a machine-readable storage medium, wherein the machine-readable storage medium stores machine-executable instructions that can be executed by the processor to implement the above-mentioned hard drive management method.

In an example, the present disclosure provides a machine-readable storage medium storing machine-executable instructions thereon, wherein the machine-executable instructions, when invoked and executed by a processor, cause the processor to implement the above-mentioned hard drive management method.

The aforementioned examples provided by the present disclosure may bring at least the following beneficial effects:

By configuring corresponding RPC command interfaces in the user-space driver, the required configuration functions, including those realized by NVMe-cli commands, can be achieved without additional operations during compilation and usage stages, without altering the inherent device attributes of the NVMe Namespace. This may offer strong applicability. Additionally, by providing RPC interfaces to upper-level management software, real-time monitoring and management of disks can be achieved, along with the ability to provide RPC commands for management plane operations or status monitoring of the disks.

### BRIEF DESCRIPTION OF THE DRAWINGS

FIG. 1 is a flowchart illustrating a hard drive management method based on an example of the present disclosure;
FIG. 2 is a structural diagram of a hard drive management apparatus based on an example of the present disclosure;
FIG. 3 is a block diagram of an electronic device based on example of the present disclosure.

### DETAILED DESCRIPTION

Illustrative examples will be described in detail herein with the examples thereof expressed in the drawings. When the following descriptions involve the drawings, like numerals in different drawings represent like or similar elements unless stated otherwise. The implementations described in the following examples do not represent all implementations consistent with the present disclosure. On the contrary, they are merely examples of an apparatus and a method consistent with some aspects of the present disclosure described in detail in the appended claims.

It should be understood that although terms such as "first," "second," and "third" may be used in the examples of the present disclosure to describe various information, the information should not be limited to these terms. These terms are merely used to distinguish one type of information from another. For example, without departing from the scope of the present disclosure, the first information can also be referred to as the second information, and similarly, the second information can also be referred to as the first information. Depending on the context, the word "if' can be interpreted as "when" or "in response to a determination."

The present disclosure provides a hard drive management method and apparatus, an electronic device, and a machine-readable storage medium to improve at least one of the aforementioned technical issues.

The specific technical solutions are described below.

In one example, the present disclosure provides a hard drive management method applied to an NVMe device management module. The method includes: driving an NVMe hard drive by invoking a user-mode NVMe driver, wherein the user-mode driver is configured with a remote procedure call (RPC) command interface, and the RPC command interface is used to enable corresponding device management functions to be performed on the NVMe hard drive based on received RPC commands; registering a polling thread to periodically issue and execute associated RPC commands through the RPC command interface, acquiring event information of the NVMe hard drive, and executing corresponding processes based on a type of event information; and in response to an operation signaling, issuing and executing the associated RPC commands through the RPC command interface to perform at least one of: configuring the NVMe hard drive based on the RPC commands; or making the NVMe hard drive respond to the RPC commands.

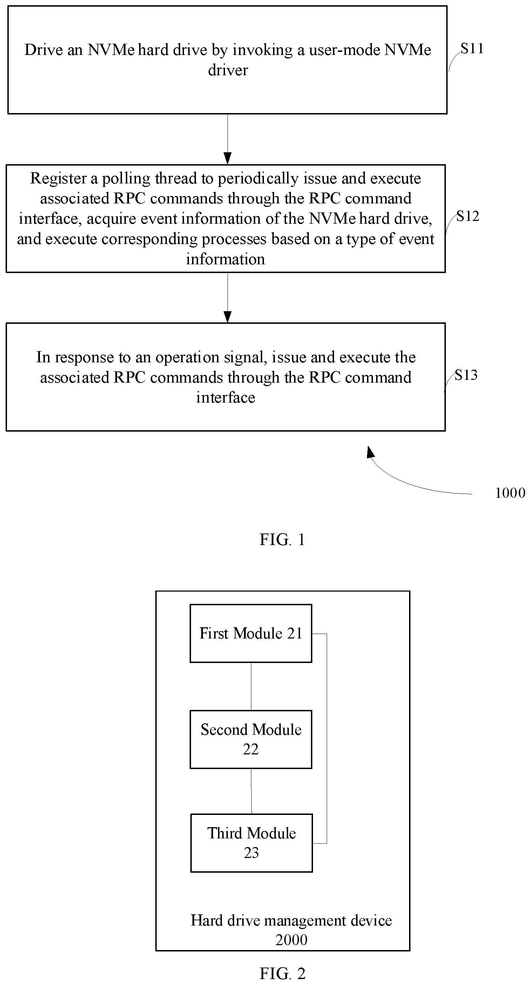

Specifically, as shown in FIG. 1, the method 1000 includes the following steps S11 to S13.

At step S11, an NVMe hard drive is driven by invoking a user-mode NVMe driver.

At step S12, a polling thread is registered to periodically issue and execute associated RPC commands through the RPC command interface, event information of the NVMe hard drive is acquired, and corresponding processes is executed based on a type of event information.

At step S13, in response to an operation signal, the associated RPC commands through the RPC command interface is issued and executed.

By configuring an associating RPC command interfaces in the user-mode driver enables the required configuration functions, including functions implemented by NVMe-cli commands, to be achieved without additional operations during the compilation and usage stages. This does not alter the inherent device properties of the NVMe Namespace and has strong applicability. Additionally, it provides an RPC interface for upper-level management software, enabling real-time monitoring and management of the disk, as well as providing RPC commands for management plane operations or status monitoring of the disk.

In an example, the registration polling thread enables the polling thread to periodically issue and execute associated RPC commands through the RPC command interface to obtain event information from the NVMe hard drive. Based on the type of event information, corresponding processing procedures are executed, which includes: executing asynchronous event reception reporting and/or alerting based on the type of event information.

In an example, in response to an operation signaling, associated RPC commands are issued and executed through the RPC command interface, so as to perform at least one of: configuring the NVMe hard drive based on the RPC commands; or making the NVMe hard drive respond to the RPC commands, which includes: responding to the operation signaling by issuing and executing NVMe hard drive firmware upgrade commands, NVMe hard drive information collection commands, or NVMe hard drive data processing commands through the RPC command interface, enabling the NVMe hard drive to perform firmware upgrades, information feedback, or data processing based on the RPC commands.

In an example, the RPC commands include customizable personalized RPC commands.

In an example, common operations and some personalized operations of NVMe-cli are implemented in the user-space NVMe driver, providing an RPC interface to the upper-level management software for real-time monitoring and management of the disk. Simultaneously, RPC command lines are provided externally for direct management operations and status monitoring of the disk.

Specifically, RPC interfaces for query/setting operations are added to the user-space SPDK NVMe driver, allowing device management modules, such as storage management softwares, to perform query and setting operations on the NVMe driver, such as setting the maximum number of namespaces and power consumption levels. The user-space NVMe driver achieves inter-process communication with the device management module through SPDK RPC, with the NVMe driver defining and registering specific RPC commands. The device management module sends query and setting commands through the RPC interface.

When a state transition occurs that is of interest to the upper-level storage management software, events such as hot-plug events are sent. The event detection of the NVMe driver module utilizes the EVENT mechanism provided by SPDK. By registering a polling thread (poller), various events of the NVMe disk are monitored in real-time. The event reporting of the NVMe driver module is done through the SPDK RPC interface. The NVMe driver module is to provide functions for event monitoring, processing, and reporting. The storage management software provides functions for asynchronous event reception and reporting.

When initiating the SPDK programming framework, SPDK initializes the functions required for RPC. An RPC-specific socket file is created at the corresponding path, such as SPDK_DEFAULT_RPC_ADDR "/var/tmp/spdk.sock", which is bound and listened to by SPDK. Additionally, a storage management software socket file is added, such as SPDK_EVENT_RPC_ADDR "/var/tmp/sdm_nvme.sock", which is also bound and listened to by SPDK.

A Poller is registered for RPC on the Master Core's Reactor, enabling RPC functions to be executed through this Poller. Specific SPDK RPC methods can be defined and registered in bdev_nvme_rpc.c, including various commonly used management functions that can be implemented through NVMe-cli, which are provided for invocation by storage management software and registered as RPC commands.

As a result, storage management software can achieve health management, status monitoring, and fault handling of NVMe SSD devices by invoking RPC interfaces.

In one embodiment, the present disclosure simultaneously provides a hard drive management apparatus 2000, as shown in FIG. 2, which is applied as a management module for an NVMe device. The apparatus includes: a first module 21 for driving an NVMe hard drive by invoking a user-mode NVMe driver, wherein the user-mode driver is configured with a remote procedure call (RPC) command interface, and the RPC command interface is used to enable corresponding device management functions to be performed on the NVMe hard drive based on received RPC commands; a second module 22 for registering a polling thread to periodically issue and execute associated RPC commands through the RPC command interface, acquiring event information of the NVMe hard drive, and executing corresponding processing flows based on a type of event information; and a third module 23 for, in response to an operation signaling, issuing and executing the associated RPC commands through the RPC command interface to perform at least one of: configuring the NVMe hard drive based on the RPC commands; or making the NVMe hard drive respond to the RPC commands.

In an example, the registration of the polling thread to periodically issue and execute associated RPC commands through the RPC command interface, obtain event information from the NVMe hard drive, and execute corresponding processes based on the type of event information, which includes: executing asynchronous event reception reporting and/or alerting based on the type of event information.

In an example, the response to operational signaling by issuing and executing associated RPC commands through the RPC command interface, so that configuring and/or responding to the NVMe hard drive based on the RPC commands, includes: responding to operational signaling by issuing and executing NVMe hard drive firmware upgrade commands, NVMe hard drive information collection commands, or NVMe hard drive data processing commands through the RPC command interface, thereby enabling the NVMe hard drive to perform firmware upgrades, information feedback, or data processing based on the RPC commands.

In an embodiment, the RPC commands include customizable personalized RPC commands.

The implementation of the device is the same or similar to the corresponding method implementation and will not be repeated here.

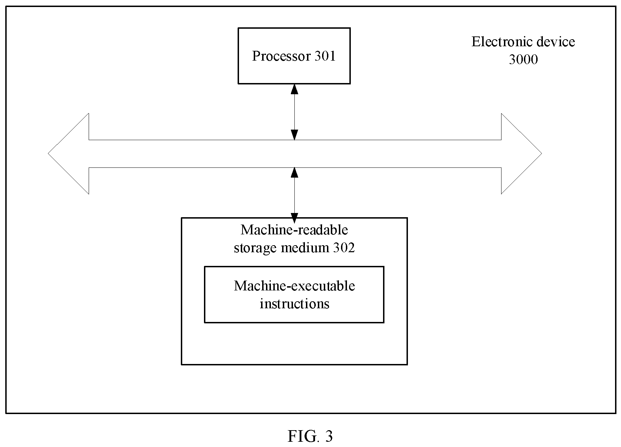

In an embodiment, the present disclosure provides an electronic device 3000 comprising a processor 301 and a machine-readable storage medium 302, wherein the machine-readable storage medium stores machine-executable instructions that can be executed by the processor, and the processor executes the machine-executable instructions to implement the aforementioned hard drive management method. From a hardware perspective, a schematic diagram of the hardware architecture can be seen in FIG. 3.

In an embodiment, the present disclosure provides a machine-readable storage medium storing machine-executable instructions, wherein when the machine-executable instructions are invoked and executed by a processor, the machine-executable instructions prompt the processor to implement the aforementioned hard drive management method.

Here, the machine-readable storage medium can be any electronic, magnetic, optical, or other physical storage device that can contain or store information such as executable instructions, data, and so on. For example, the machine-readable storage medium can be RAM (Random Access Memory), volatile memory, non-volatile memory, flash memory, storage drives (such as hard disk drives), solid-state drives, any type of storage disc (such as optical discs, DVDs, etc.), or similar storage media, or combinations of them.

The systems, devices, modules, or units described in the above embodiments can be specifically implemented by computer chips or entities, or by products with certain functions. A typical implementation apparatus is a computer, which can be in the form of a personal computer, laptop, cellular phone, camera phone, smart phone, personal digital assistant, media player, navigation device, email device, game console, tablet computer, wearable device, or a combination of any of these devices.

For the convenience of description, the above apparatus is described separately in terms of their functions. Of course, in implementing the present disclosure, the functions of the various units can be implemented in one or more software and/or hardware.

Those skilled in the art should understand that embodiments of the present disclosure may be provided as a method, a system, or a computer program product. Therefore, the present disclosure may take the form of a purely hardware embodiment, a purely software embodiment, or an embodiment combining software and hardware aspects. Moreover, the embodiments of the present disclosure may take the form of a computer program product implemented on one or more computer-usable storage media (including but not limited to disk storage, CD-ROM, optical memory, etc.) containing computer-usable program code.

The present disclosure is described with reference to flowcharts and/or block diagrams of methods, devices (systems), and computer program products based on embodiments of the present disclosure. It should be understood that each process and/or block in the flowcharts and/or block diagrams, as well as combinations of processes and/or blocks in the flowcharts and/or block diagrams, can be implemented by computer program instructions. These computer program instructions can be provided to the processors of general-purpose computers, special-purpose computers, embedded processors, or other programmable data processing devices to produce a machine, such that the instructions, when executed by the processors of the computer or other programmable data processing devices, generate a means for implementing the functions specified in one or more processes and/or blocks of the flowcharts and/or block diagrams.

Furthermore, these computer program instructions can be stored in computer-readable memory that can guide the computer or other programmable data processing devices to work in a specific manner, such that the instructions stored in the computer-readable memory generate an article of manufacture including an instruction means that implements the functions specified in one or more processes and/or blocks of the flowcharts and/or block diagrams.

These computer program instructions can also be loaded onto a computer or other programmable data processing devices, such that a series of operational processes are executed on the computer or other programmable devices to produce computer-implemented processing, thereby providing processes for implementing the functions specified in one or more processes and/or blocks of the flowcharts and/or block diagrams when the instructions are executed on the computer or other programmable devices.

Those skilled in the art should understand that embodiments of the present disclosure may be provided as a method, a system, or a computer program product. Therefore, the present disclosure may take the form of a purely hardware embodiment, a purely software embodiment, or an embodiment combining software and hardware aspects. Moreover, the present disclosure may take the form of a computer program product implemented on one or more computer-usable storage media (which may include but are not limited to disk storage, CD-ROM, optical memory, etc.) containing computer-usable program code.

The above descriptions are merely embodiments of the present disclosure and are not intended to limit the present disclosure. For those skilled in the art, the present disclosure may undergo various modifications and variations. Any modifications, equivalent substitutions, improvements, etc. made within the spirit and principle of the present disclosure should be included within the scope of the claims of the present disclosure.

## Claims

1. A hard drive management method, applied to a management module for a non-volatile memory express, NVMe, device, and comprising:
driving an NVMe hard drive by invoking a user-mode NVMe driver, wherein the user-mode NVMe driver is configured with a remote procedure call, RPC, command interface, and the RPC command interface is used to enable corresponding device management functions to be performed on the NVMe hard drive based on received RPC commands;
registering a polling thread to periodically issue and execute associated RPC commands through the RPC command interface, acquiring event information of the NVMe hard drive, and executing corresponding processes based on a type of event information; and
in response to an operation signaling, issuing and executing the associated RPC commands through the RPC command interface to perform at least one of: configuring the NVMe hard drive based on the RPC commands; or making the NVMe hard drive respond to the RPC commands.

2. The method according to claim 1, wherein registering the polling thread to periodically issue and execute the associated RPC commands through the RPC command interface, acquiring the event information of the NVMe hard drive, and executing the corresponding processes based on the type of event information, comprises:
executing asynchronous event reception reporting and/or alerting based on the type of event information.

3. The method according to claim 1, wherein in response to the operation signaling, issuing and executing the associated RPC commands through the RPC command interface to perform at least one of: configuring the NVMe hard drive based on the RPC commands; or making the NVMe hard drive respond to the RPC commands, comprises:
in response to the operation signaling, issuing and executing an NVMe hard drive firmware upgrade command, an NVMe hard drive information collection command, or an NVMe hard drive data processing command through the RPC command interface, such that the NVMe hard drive performs firmware upgrade, information feedback, or data processing based on the RPC commands.

4. The method according to claim 1, wherein the RPC commands comprise customizable personalized RPC commands.

5. A hard drive management apparatus, applied to a management module for a non-volatile memory express, NVMe, device, and comprising:
a first module for driving an NVMe hard drive by invoking a user-mode NVMe driver, wherein the user-mode driver is configured with a remote procedure call, RPC, command interface, and the RPC command interface is used to enable corresponding device management functions to be performed on the NVMe hard drive based on received RPC commands;
a second module for registering a polling thread to periodically issue and execute associated RPC commands through the RPC command interface, acquiring event information of the NVMe hard drive, and executing corresponding processing flows based on a type of event information; and
a third module for, in response to an operation signaling, issuing and executing the associated RPC commands through the RPC command interface to perform at least one of: configuring the NVMe hard drive based on the RPC commands; or making the NVMe hard drive respond to the RPC commands.

6. The apparatus according to claim 5, wherein registering the polling thread to periodically issue and execute the associated RPC commands through the RPC command interface, acquiring the event information of the NVMe hard drive, and executing the corresponding processes based on the type of event information, comprises:
executing asynchronous event reception reporting and/or alerting based on the type of event information.

7. The apparatus according to claim 5, wherein in response to the operation signaling, issuing and executing the associated RPC commands through the RPC command interface to perform at least one of: configuring the NVMe hard drive based on the RPC commands; or making the NVMe hard drive respond to the RPC commands, comprises:
in response to the operation signaling, issuing and executing an NVMe hard drive firmware upgrade command, an NVMe hard drive information collection command, or an NVMe hard drive data processing command through the RPC command interface, such that the NVMe hard drive performs firmware upgrade, information feedback, or data processing based on the RPC commands.

8. The apparatus according to claim 5, wherein the RPC commands comprise customizable personalized RPC commands.

9. An electronic device, comprising: a processor and a machine-readable storage medium, wherein the machine-readable storage medium stores machine-executable instructions that can be executed by the processor to implement the method according to any one of claims 1 to 4.

10. A machine-readable storage medium, storing machine-executable instructions thereon, wherein the machine-executable instructions, when invoked and executed by a processor, cause the processor to implement the method according to any one of claims 1 to 4.
